# FASCICULE DE BREVET EUROPEEN

(11) **EP 2 252 113 B1**
(45) Date de publication et mention de la délivrance du brevet: **25.04.2012**
(21) Numéro de dépôt: 10161230.7
(22) Date de dépôt: 27.04.2010
(51) Int. Cl.: H04W 48/06, H04W 36/38, H04W 76/06, H04W 84/04

(54) **Système et procédé de gestion de l'accès d'un terminal mobile privilégié à une femto-cellule**
System und Verfahren zur Verwaltung des Zugriffs eines privilegierten Mobilendgerätes zu einer Femto-Zelle
System and method of managing access from a privileged mobile terminal to a femto-cell

(30) Priorité: 13.05.2009 FR 0902303
(43) Date de publication de la demande: 17.11.2010
(73) Titulaire: Societé Française du Radiotéléphone, 75008 Paris (FR)
(72) Inventeur: Laune, Marthe, 78000, VERSAILLES (FR); Fattouch, Imad, 75013, PARIS (FR)
(74) Mandataire: Debay, Yves

(56) Documents cités:
- EP-A1- 1 771 023
- WO-A1-01/37596
- GB-A- 2 449 672
- US-A1- 2006 215 600
- US-A1- 2007 129 079

## Description

La présente invention se rapporte au domaine des systèmes de gestion de l'accès d'un terminal mobile à une femto-cellule et plus particulièrement au domaine des dispositifs de gestion de l'accès d'un terminal mobile à une femto-cellule lorsque le terminal dispose d'un accès privilégié à cette femto cellule.

Les femto-cellules peuvent être définies comme des cellules radioélectriques qui permettent notamment d'élargir la portée des systèmes d'accès numériques distribués dans un espace de dimensions limitées. Une femto-cellule est, comme son nom l'indique, une cellule radio avec une puissance inférieure à celle d'une antenne relais capable d'assurer la communication à faible puissance entre l'intérieur et une liaison extérieure pour, entre autres, les technologies 2G (seconde génération) et 3G (troisième génération) et relayer à l'intérieur de l'entreprise ou du domicile, les flux numériques du réseau fixe vers le mobile en supprimant la nécessité d'avoir des terminaux dédiés. A l'origine de la femto-cellule, la « femto-station » forme la base du réseau des communications cellulaires installées dans l'espace délimité qui crée par son fonctionnement cette petite cellule. Ces « femto-stations » sont connectables au réseau par une liaison filaire d'accès en ADSL (*Asymmetric Digital Subscriber Line*) ou une liaison à fibres optiques ou par un modem optique ou par un modem câble. Le réseau de communication comprend tout un ensemble d'équipements qui traitent l'information, la gèrent, la transportent, la stockent tout en permettant la connexion et l'intégration de tous ces équipement de façon cohérente. Une passerelle est utilisée pour gérer les équipements domestiques qui doivent interfonctionner en protocole IP (*Internet Protocol*) à un moment ou à un autre, soit par câblages adaptés ou par des liaisons radioélectriques internes à l'espace de fonctionnement de la femto-cellule.

C'est ainsi que les femto-cellules permettent également de former des points d'accès qui intègrent plusieurs technologies, imposant du même coup la miniaturisation, l'intégration et la convergence de média, fixe et mobile. Ces femto-cellules ont notamment pour objectif d'être utilisées comme points d'accès 2G et 3G intégrés dans un boîtier de fournisseur d'accès ADSL pour améliorer automatiquement la couverture des téléphones mobiles de troisième génération, permettant la bascule des communications utilisant un terminal mobile standard sur le réseau d'accès IP au lieu de passer sur les antennes des opérateurs. Les femto-cellules utilisent ainsi le haut débit pour fournir des services voix et données de la même manière qu'une station BTS (*Base Transceiver Station*) ou node B d'un macro-réseau en encapsulant le trafic de la téléphonie mobile sur un réseau Internet. L'utilisation de telles femto-cellules permet alors de s'affranchir d'antennes surpuissantes en quelques lieux au profit d'une multitude de « mini-antennes » qui sont éparpillées à travers l'ensemble d'une zone réalisant alors une amélioration du maillage du réseau et de leur capacité de débit.

Les femto-cellules peuvent fonctionner selon différents modes. Un premier mode, dit d'accès fermé, restreint l'usage de la cellule à une communauté de terminaux mobiles dont les utilisateurs forment un foyer identifié, par exemple par un numéro d'abonnement spécifique. Un second mode, d'accès ouvert, restreint l'usage de la cellule à un ensemble de terminaux plus élargie et dont les utilisateurs peuvent être identifiés par exemple par leur opérateur. Un troisième mode, d'accès communautaire, autorise un accès libre à tous les terminaux ayant souscrit à une telle formule pour être connecté à une femto-cellule.

Un exemple de gestion des connexions des terminaux à une femto-cellule dont le mode d'accès est défini et plus ou moins restreint, est détaillé dans la demande de brevet FR 08/07477. Ce document enseigne ainsi comment, pour chaque terminal, une sélection s'opère pour autoriser ou interdire l'accès à un ensemble de femto-cellules, cette autorisation ou cette interdiction de l'accès se trouve alors mémoriser par le terminal. Cependant un tel dispositif présente une limite.

En effet, lorsqu'une femto-cellule opère avec un mode d'accès ouvert ou communautaire, celle-ci présente une capacité physique radio maximum limitée dans le nombre de signaux de terminaux mobiles qu'elle est en mesure d'accueillir et de maintenir connecté. Cette limite dans les ressources de la femto-cellule devient problématique lorsque celle-ci fonctionne avec une saturation de sa capacité de connexion et qu'un utilisateur abonné d'un foyer qui souhaite se connecter à sa propre femto-cellule se voit refuser l'accès.

Une alternative à ce problème consiste à laisser en permanence une connexion à un canal vacant lorsque aucun utilisateur abonné, par exemple du foyer de la femto-cellule, n'est connecté à la femto-cellule. Ainsi, la cellule qui dispose de quatre canaux demeure en permanence prête pour réceptionner la connexion d'un terminal mobile du foyer sur ce canal dit « terminal privilégié ». Toutefois, il convient de remarquer qu'une telle solution a l'inconvénient de maintenir inutilisé une part importante de la capacité radio de la femto-cellule. La femto-cellule ne fonctionne alors qu'avec 75% de ses capacités.

Le document GB 2 449 672 A décrit une méthode et un dispositif permettant de rediriger des requêtes de communication si tous les canaux d'un point d'accès quelconque sont occupés, vers une macro-cellule.

La présente invention a pour objet de supprimer un ou plusieurs inconvénients de l'art antérieur et notamment de proposer une solution qui permette à une femto-cellule d'être toujours en mesure d'accueillir la connexion d'un terminal mobile privilégié tout en assurant un fonctionnement de celle-ci à un niveau optimal de ses capacités supérieur à 75%.

Cet objectif est atteint grâce à un système de contrôle de l'accès d'au moins un terminal mobile privilégié à une femto-cellule particulière, opérant selon un mode d'accès restreint, au sein d'un réseau de type GSM, GPRS ou UMTS, caractérisé en ce que le système comprend, au niveau de chacune des femto-cellules, au moins :
- un dispositif de conservation d'une quantité de ressource minimale de gestion de connexion à la femto-cellule lorsque la capacité maximale des ressources radio de la femto-cellule est atteinte, pour permettre une substitution des terminaux connectés à la cellule,
- un dispositif de reconnaissance d'au moins un terminal mobile privilégié, ce dispositif, positionné, intégrant une mémoire mémorisant au moins une base de données comprenant au moins un identifiant d'utilisateur reconnu comme susceptible d'avoir une connexion préférentielle avec la femto-cellule,
- un dispositif d'interruption forcée de la connexion entre la femto-cellule et au moins un terminal non-privilégié sélectionné par un dispositif de sélection dont une communication est en cours sur la femto-cellule.

Un autre objectif de l'invention est de proposer un procédé adapté pour la mise en oeuvre du système de l'invention.

Ce but est atteint grâce à un procédé de contrôle de l'accès d'au moins un terminal mobile privilégié à une femto-cellule particulière, opérant selon un mode d'accès restreint, au sein d'un réseau de type GSM, GPRS ou UMTS, et mettant en jeu un système de contrôle selon l'invention, caractérisé en ce que, lorsque la capacité maximale des ressources radio de la femto-cellule est atteinte suite à la connexion d'un nouveau terminal mobile, le procédé comprend :
- une étape de conservation d'une quantité de ressource minimale pour assurer une gestion de connexion à la femto-cellule.

L'invention, avec ses caractéristiques et avantages, ressortira plus clairement à la lecture de la description faite en référence aux dessins annexés dans lesquels :

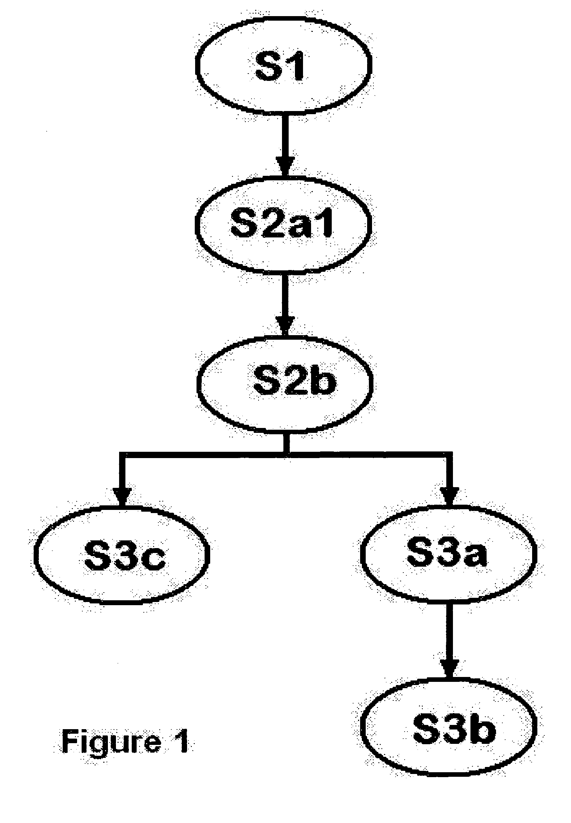

- la figure 1 représente schématiquement un exemple de fonctionnement du procédé de l'invention,

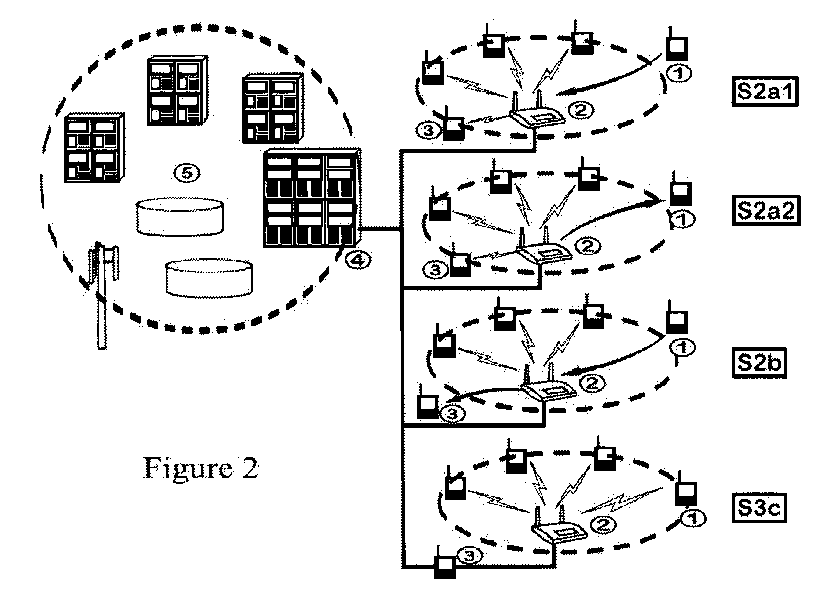

- la figure 2 représente schématiquement un exemple d'arrangement du réseau utilisant le système de l'invention et détaillant certaines étapes du procédé de fonctionnement de l'invention,

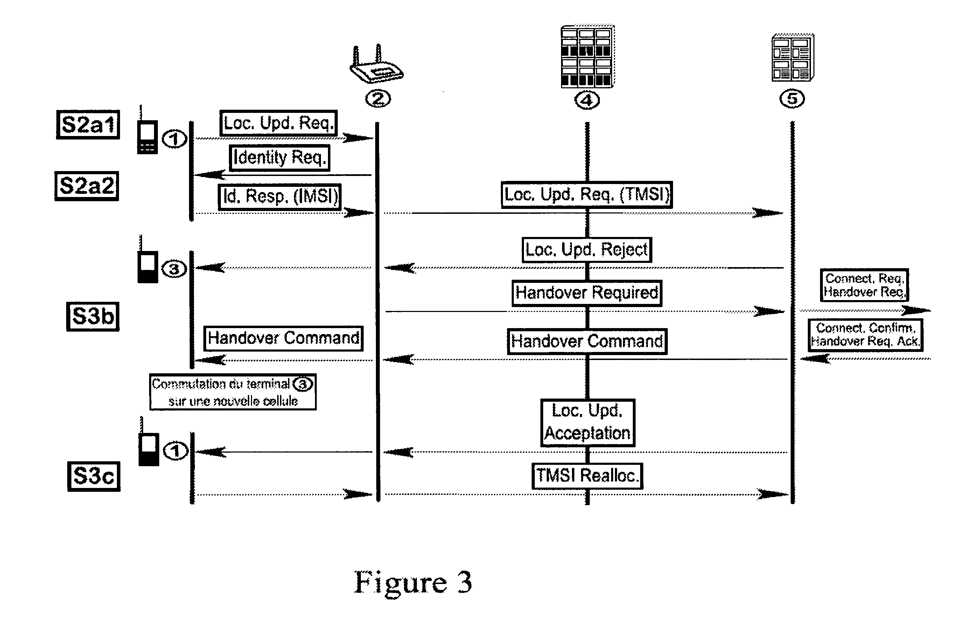

- la figure 3 représente schématiquement un exemple des différentes étapes d'un mécanisme général de connexion d'un terminal mobile privilégié au détriment de la connexion d'un terminal mobile non-privilégié.

Il convient de préciser que dans la présente rédaction, le terme « terminal privilégié » se rapporte à un terminal utilisé par le propriétaire de la femto-cellule dans le cadre d'un fonctionnement fermé de la cellule. La définition de ce terme peut se trouver élargie à un ensemble de terminaux fonctionnant dans le cadre d'un abonnement avec un opérateur particulier, lorsque la femto-cellule fonctionne selon un mode ouvert qui n'est pas communautaire. Le reste des terminaux est alors appelé « terminaux non-privilégiés ». Pour opérer, la femto-cellule est connectée à une passerelle (4) qui permet notamment le transfert d'information entre le réseau Internet de la femto-cellule (2) et le réseau GSM ou UMTS qui intègre les différents éléments du réseau, dont notamment une MSC (Mobile service Switching Center) (5).

Le système de l'invention qui permet de répondre au problème posé s'appuie non pas sur le maintien libre d'une capacité radio minimale de la femto-cellule (2) de sorte qu'elle soit prête à être utilisée par un terminal privilégié (1), mais sur la conservation de ressource de gestion d'appel lorsque la capacité maximale des ressources radio de la femto-cellule est atteinte. Ces ressources de gestion d'appel qui correspondent à la capacité radio minimale conservée doivent être au moins suffisantes pour permettre de fournir une réponse à un terminal privilégié qui transmet une requête de mise à jour de la localisation à la femto-cellule. Cette différence de fonctionnement de la femto-cellule par rapport à l'art antérieur autorise une utilisation optimale des capacités radio de la cellule par des terminaux mobiles non-privilégiés (3) en transit sur la femto-cellule.

Le système de contrôle de l'accès d'au moins un terminal mobile à une femto-cellule selon l'invention intègre donc au moins un dispositif arrangé pour conserver une quantité de ressource minimale de gestion d'appel lorsque la capacité maximale des ressources radio de la cellule sont atteintes, notamment en raison de connexion par un ou plusieurs terminaux mobiles qui ne sont pas reconnus comme étant privilégiés avec la femto-cellule. Ces ressources minimales, maintenues libres, sont strictement destinées à permettre à la femto-cellule (2) de répondre à toute requête de localisation émise par un terminal mobile approchant.

Le système de l'invention comprend également un dispositif de reconnaissance des terminaux privilégiés (1) et dont la connexion avec la femto-cellule (2) est prioritaire par rapport aux autres terminaux. Ce dispositif de reconnaissance est associé ou intègre un moyen mémoire qui comprend une base de données d'au moins un identifiant d'utilisateur reconnu pour opérer une connexion préférentielle avec la femto-cellule. Selon un mode de réalisation particulier, l'identifiant utilisé pour reconnaître un terminal privilégié est le numéro IMSI (*International Mobile Subscriber Identity*). Cependant, tout autre identifiant peut également être utilisé.

De même, le système de l'invention comprend un dispositif d'interruption d'une connexion existante entre la femto-cellule et un des terminaux non-privilégiés qui utilisent des ressources radio de la femto-cellule. Selon un mode de réalisation préféré du système de l'invention, ce dispositif d'interruption d'une connexion est associé à un dispositif de sélection du terminal non-privilégié dont la connexion avec la cellule doit être interrompue. La sélection d'un terminal non-privilégié fait intervenir un ou plusieurs paramètres enregistrés dans un moyen mémoire associé au dispositif de sélection. Ces différents paramètres peuvent être, par exemple, une ou plusieurs caractéristiques de souscription des utilisateurs non-privilégiés de la femto-cellule, la durée de l'appel en cours ou bien encore le type de communication qui est opéré, c'est-à-dire si la communication implique simplement de la voix, une combinaison voix et image ou bien encore un échange de données. Les différents paramètres qui doivent être utilisés pour effectuer une sélection peuvent être hiérarchisés, de sorte que certains paramètres soient pris en compte prioritairement par rapport à d'autres lors d'étapes de sélections successives des terminaux non-privilégiés pour aboutir à la sélection d'un seul d'entre eux. Le choix et l'organisation hiérarchique de ces paramètres sont prédéfinis et peuvent être modifiés en fonction de contraintes ou d'orientations marketing privilégiées.

Il convient de remarquer que les différents dispositifs du système sont propres à chacune des femto-cellules du réseau.

Le procédé qui permet la mise en oeuvre du système de contrôle de l'invention comprend comme étape centrale dans son fonctionnement une étape de conservation (S1) d'une quantité de ressource minimale pour assurer une gestion d'appel. Ce maintien d'un nombre minimal de ressources radio est notamment assuré lorsque les capacités radio de la femto-cellule sont toutes utilisées par des terminaux non-privilégiés.

Cette étape est permet notamment le déroulement des étapes restantes du procédé. Ainsi, la détection (S2a1) d'une présence d'un nouveau terminal mobile dans l'environnement de la femto-cellule s'opère par le transfert d'une requête de mise à jour de localisation (Location Update Request) depuis un terminal mobile vers la femto-cellule (2). La femto-cellule effectue alors une demande (S2a2) d'identification (Identity Request) à laquelle le terminal répond en fournissant un identifiant (Identity Response (IMSI)). A réception de l'identifiant, la femto-cellule (2) effectue une reconnaissance (S2b) d'un éventuel terminal privilégié (1). Cette reconnaissance passe notamment par la recherche d'un ou de plusieurs identifiants de l'utilisateur du terminal mobile détecté, ces identifiants étant comparés avec ceux d'une base de données correspondants aux identifiants des terminaux recensés comme susceptible d'obtenir une connexion prioritaire et privilégiée avec la femto-cellule. La reconnaissance d'un terminal privilégié (1) entraîne l'envoi de la requête de mise à jour de localisation (Location Update Request) depuis la femto-cellule (2) vers un MSC (5) qui gère la femto-cellule, via la passerelle (4).

Lorsqu'un terminal dont la connexion avec une femto-cellule est privilégiée est reconnu, une des connexions d'un des terminaux non-privilégiés est interrompue (S3b). Le choix du terminal non-privilégié avec la femto-cellule s'effectue comme expliqué précédemment par une ou plusieurs sélections (S3a) successives qui définissent un profil du terminal non-privilégié pour lequel la connexion avec la femto-cellule va être interrompue. Les paramètres de sélection peuvent eux-mêmes être hiérarchisés de sorte que, en fonction des critères remplis par chacun des terminaux non-privilégiés, une hiérarchie entre les terminaux connectés à la femto-cellule est définie et la communication du terminal le moins prioritaire est interrompue (S3b).

Parmi les paramètres de sélection mentionnés précédemment, on peut, par exemple et de façon non limitative, définir que :
- selon la durée de la communication, la connexion d'un terminal sera maintenue en proportion,
- lorsque la communication est opérée selon un mode visio, celle-ci sera prioritairement maintenue par rapport à une communication uniquement audio, elle-même prioritaire par rapport à un simple transfert de données.

A réception d'une requête de mise à jour de localisation d'un terminal privilégié, le MSC (5) déclenche d'une part l'interruption (S3b) de la communication entre un terminal non-privilégié (3) sélectionné et la femto-cellule et d'autre part autorise (S3c) la mise à jour de localisation du terminal privilégié (1) identifié par la femto-cellule (2).

L'interruption (S3b) de la communication entre un terminal non-privilégié (3) et la femto-cellule (2) s'effectue par l'envoie d'un signal de rejet. Le signal de rejet est envoyé à la femto-cellule qui l'aiguille vers le terminal sélectionné. Simultanément, la femto-cellule transmet une requête de transfert automatique intercellulaire (Handover Required) pour le terminal non-privilégié sélectionné, auprès du MSC. Cette requête est susceptible d'être transmise à une ou plusieurs autres installations du réseau pour être analysée ou vérifiée. Le MSC (5) transmet alors une commande (Handover Command) de transfert au terminal non-privilégié (3). A réception de ce signal de commande, le terminal non-privilégié commute sur une nouvelle cellule, par exemple de couche identique comme une femto-cellule ou de couche inférieure comme une macro ou une micro-cellule. Toutefois, si aucune des cellules du réseau, voisines de la femto-cellule, n'est en mesure de recevoir une connexion du terminal non-privilégié qui est éjecté de la femto-cellule, la communication du terminal éjectée est alors interrompue.

Concomitamment, voire consécutivement, à l'interruption de la connexion du terminal non-privilégié (3) avec la femto-cellule (2), s'effectue la connexion (S3c) du terminal privilégié (1) avec la femto-cellule. La connexion du terminal privilégié (1) avec la femto-cellule (2) s'effectue par le transfert d'une acceptation de mise à jour de localisation (Location Update Acceptation) au terminal privilégié qui en réponse retourne un signal de confirmation de la connexion (TMSI Realloc). Afin que la femto-cellule (2) reconnaisse le mobile et sache que celui-ci est privilégié, la femto-cellule doit déclencher la procédure de mise à jour de localisation au cours de laquelle l'IMSI du terminal est échangé avec le réseau. A partir de cet instant, le réseau décide de maintenir ou de rejeter la connexion d'un terminal mobile non-privilégié.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de contrôle de l'accès d'au moins un terminal mobile privilégié (1) à une femto-cellule (2) particulière, opérant selon un mode d'accès restreint, au sein d'un réseau de type GSM, GPRS ou UMTS, **caractérisé en ce que** le système comprend au moins :
- un dispositif de conservation d'une quantité de ressource minimale de gestion d'appel lorsque la capacité maximale des ressources radio de la femto-cellule est atteinte,
- un dispositif de reconnaissance d'au moins un terminal mobile privilégié, le dispositif intégrant un moyen mémoire comprenant au moins une base de données d'au moins un identifiant d'utilisateur reconnu comme susceptible d'avoir une connexion préférentielle avec la femto-cellule,
- un dispositif d'interruption de la connexion entre la femto-cellule et au moins un terminal non-privilégié (3) dont une communication est en cours sur la femto-cellule,
le système comprenant en outre un dispositif de sélection d'au moins un terminal mobil non-privilégié dont une communication est en cours sur la femto-cellule, ce dispositif de sélection intégrant un moyen mémoire comprenant au moins un paramètre de sélection pour déterminer le profil du terminal mobil non-privilégié à retirer de la femto-cellule.

2. Système de contrôle de l'accès d'au moins un terminal mobile privilégié à une femto-cellule selon la revendication précédente, **caractérisé en ce que** au moins un des paramètres de sélection du terminal mobile non-privilégié à retirer enregistrés dans le moyen mémoire est sélectionné parmi ceux d'une liste comprenant notamment les caractéristiques de souscription des utilisateurs de terminaux non-privilégiés connectés à la femto-cellule, la durée de l'appel en cours, le type communication en cours (visio, voix, données).

3. Système de contrôle de l'accès d'au moins un terminal mobile privilégié à une femto-cellule selon une des revendications précédentes, **caractérisé en ce que** le dispositif d'interruption de la connexion entre la femto-cellule et un terminal, intègre un moyen de transfert automatique intercellulaire d'au moins un terminal mobile non-privilégié dont une communication est en cours sur la femto-cellule.

4. Système de contrôle de l'accès d'au moins un terminal mobile privilégié à une femto-cellule selon une des revendications précédentes, **caractérisé en ce que** l'identifiant utilisateur pris en compte par le dispositif de reconnaissance d'un terminal mobile privilégié pour effectuer une connexion préférentielle avec la femto-cellule est l'IMSI (*International Mobile Subscriber Identity*)*.*

5. Procédé de contrôle de l'accès d'au moins un terminal mobile privilégié à une femto-cellule particulière, opérant selon un mode d'accès restreint, au sein d'un réseau de type GSM, GPRS ou UMTS, et mettant en jeu un système de contrôle selon au moins une des revendications précédentes, **caractérisé en ce que**, lorsque la capacité maximale des ressources radio de la femto-cellule est atteinte suite à la connexion d'un nouveau terminal mobile, le procédé comprend :
- une étape de conservation (S1) d'une quantité de ressource minimale pour assurer une gestion d'appel,
et **en ce que** suite à une étape de détection (S2a1) de la présence d'un nouveau terminal mobile dans l'environnement de la femto-cellule, le procédé comprend une étape de gestion de la connexion du nouveau terminal par les ressources de gestion d'appel, cette étape incluant notamment :
- une étape de reconnaissance (S2b) du nouveau terminal détecté comme étant un terminal mobile privilégié,
- une étape de sélection (S3a) du terminal non-privilégié à déconnecter de la femto-cellule,
- une étape d'interruption (S3b) de la connexion d'un terminal non-privilégié avec la femto-cellule,
- une étape de connexion (S3c) du terminal mobile détecté privilégié à la femto-cellule.

6. Procédé de contrôle de l'accès d'au moins un terminal mobile privilégié à une femto-cellule particulière, selon une des revendications précédentes, **caractérisé en ce que** l'étape d'interruption (S3b) de la connexion du terminal non-privilégié avec la femto-cellule consiste en une bascule de la connexion du terminal mobile non-privilégié sur une cellule voisine de la femto-cellule.

## Claims

1. System for controlling the access of at least one priority mobile terminal (5) to a particular femtocell (2), operating in restricted access mode within a network of GSM, GPRS or UMTS type, **characterized in that** the system comprises at least:
- a device for retaining a minimum amount of call management resource when the maximum capacity of the radio resources of the femtocell is reached;
- a device for recognizing at least one priority mobile terminal, the device integrating memory means comprising at least one database of at least one user identifier recognized as being able to have a priority connection with the femtocell,
- a device for interrupting the connection between the femtocell and at least one non-priority terminal (3) in which communication is in progress on the femtocell,
the system further comprising a device for selecting at least one non-priority mobile terminal having communication in progress on the femtocell, this selection device integrating memory means comprising at least one selection parameter to determine the profile of the non-priority mobile terminal to be removed from the femtocell.

2. The system for controlling the access of at least one priority mobile terminal to a femtocell according to the preceding claim, **characterized in that** at least one of the selection parameters to select the non-priority mobile terminal to be removed that are stored in the memory means is selected from those in a list notably comprising the subscription characteristics of the users of non-priority terminals connected to the femtocell, the duration of the call in progress, the type of communication in progress (visio, voice, data).

3. The system for controlling the access of at least one priority mobile terminal to a femtocell according to one of the preceding claims, **characterized in that** the device for interrupting the connection between the femtocell and a terminal integrates means for automatic inter-cell transfer of at least one non-priority mobile terminal having a communication in progress on the femtocell.

4. The system for controlling the access of at least one priority mobile terminal to a femtocell according to one of the preceding claims, **characterized in that** the user identifier taken into account by the device for recognizing a priority mobile terminal for currying out priority connection with the femtocell is IMSI (*International Mobile Subscriber Identity*).

5. A method for controlling the access of at least one priority mobile terminal to a particular femtocell, operating in restricted access mode within a network of GSM, GRPS or UMTS type, entailing a control system according to at least one of the preceding claims, **characterized in that**, when the maximum capacity of the radio resources of the femtocell is reached further to the connection of a new mobile terminal, the method comprises:
- a retaining step (S1) to retain a minimum of resources to ensure call management,
and **in that** after a detection step (S2a1) of the presence of a new mobile terminal in the environment of the femtocell, the method comprises a step to manage the connection of the new terminal by the call management resources, this step notably including:
- a recognition step (S2b) of the new terminal detected as being a priority mobile terminal,
- a selection step (S3a) of the non-priority terminal to be disconnected from the femtocell,
- an interruption step (S3b) to interrupt the connection of a non-priority terminal with the femtocell,
- a connection step (S3c) to connect the detected priority mobile terminal to the femtocell.

6. The method for controlling the access of at least one priority mobile terminal to a particular femtocell, according to one of the preceding claims, **characterized in that** the interruption step (S3b) to interrupt the connection of the non-priority terminal with the femtocell consists of switching the connection of the non-priority mobile terminal over to a neighbouring cell of the femtocell.

## Patentansprüche

1. System zur Kontrolle des Zugangs mindestens eines bevorzugten mobilen Endgeräts (1) zu einer besonderen Femto-Zelle (2), die innerhalb eines Netzwerks vom Typ GSM, GPRS oder UMTS nach einem beschränkten Zugangsmodus arbeitet, **dadurch gekennzeichnet, dass** das System mindestens umfasst:
- eine Vorrichtung zur Bewahrung einer minimalen Ressourcenmenge zur Anrufverwaltung, wenn die maximale Kapazität der Funkressourcen der Femto-Zelle erreicht ist,
- eine Vorrichtung zur Erkennung mindestens eines bevorzugten mobilen Endgeräts, wobei die Vorrichtung ein Speichermittel integriert, das mindestens eine Datenbank mindestens einer Benutzerkennung umfasst, die als imstande anerkannt ist, eine bevorzugte Verbindung mit der Femto-Zelle zu haben,
- eine Vorrichtung zur Unterbrechung der Verbindung zwischen der Femto-Zelle und mindestens einem nicht bevorzugten Endgerät (3), mit dem gerade eine Kommunikation über die Femto-Zelle stattfindet,
wobei das System ferner eine Vorrichtung zur Auswahl mindestens eines nicht bevorzugten mobilen Endgeräts, mit dem gerade eine Kommunikation über die Femto-Zelle stattfindet, umfasst, wobei diese Auswahlvorrichtung ein Speichermittel integriert, das mindestens einen Auswahlparameter umfasst, um das Profil des nicht bevorzugten mobilen Endgeräts zu bestimmen, das aus der Femto-Zelle zu entfernen ist.

2. System zur Kontrolle des Zugangs mindestens eines bevorzugten mobilen Endgeräts zu einer Femto-Zelle nach vorangehende Anspruch, **dadurch gekennzeichnet, dass** mindestens einer der Auswahlparameter des zu entfernenden nicht bevorzugten mobilen Endgeräts, die im Speichermittel integriert sind, aus einer Liste ausgewählt ist, die vor allem die Eintragungsmerkmale der Benutzer von nicht bevorzugten Endgeräten, die mit der Femto-Zelle verbunden sind, die Dauer des gerade stattfindenden Anrufs, die Art der gerade stattfindenden Kommunikation (Visio, Stimme, Daten) umfasst.

3. System zur Kontrolle des Zugangs mindestens eines bevorzugten mobilen Endgeräts zu einer Femto-Zelle nach einem der vorangehenden Ansprüche, **dadurch gekennzeichnet, dass** die Vorrichtung zur Unterbrechung der Verbindung zwischen der Femto-Zelle und einem Endgerät ein interzellulares automatisches Transfermittel mindestens eines nicht bevorzugten mobilen Endgeräts integriert, mit dem gerade eine Kommunikation über die Femto-Zelle stattfindet.

4. System zur Kontrolle des Zugangs mindestens eines bevorzugten mobilen Endgeräts zu einer Femto-Zelle nach einem der vorgehenden Ansprüche, **dadurch gekennzeichnet, dass** die Benutzerkennung, die von der Erkennungsvorrichtung eines bevorzugten mobilen Endgeräts berücksichtigt wird, um eine bevorzugte Verbindung mit der Femto-Zelle herzustellen, IMSI (International Mobile Subscriber Identity) ist.

5. Verfahren zur Kontrolle des Zugangs mindestens eines bevorzugten mobilen Endgeräts zu einer besonderen Femto-Zelle, die innerhalb eines Netzwerks vom Typ GSM, GPRS oder UMTS nach einem beschränkten Zugangsmodus arbeitet, und ein Kontrollsystem nach mindestens einem der vorangehenden Ansprüche umsetzt, **dadurch gekennzeichnet, dass**, wenn die maximale Kapazität der Funkressourcen der Femto-Zelle infolge der Verbindung eines neuen mobilen Endgeräts erreicht ist, das Verfahren umfasst:
- einen Schritt der Bewahrung (S1) einer minimalen Ressourcenmenge zur Gewährleistung einer Anrufverwaltung,
und dass nach einem Schritt der Feststellung (S2a1) der Anwesenheit eines neuen mobilen Endgeräts im Umfeld der Femto-Zelle das Verfahren einen Schritt der Verwaltung der Verbindung des neuen Endgeräts durch die Anrufverwaltungsressourcen umfasst, wobei dieser Schritt vor allem einschließt:
- einen Schritt der Erkennung (S2b) des festgestellten neuen Endgeräts als ein bevorzugtes mobiles Endgerät,
- einen Schritt der Auswahl (S3a) des nicht bevorzugten Endgeräts, das aus der Femto-Zelle abzumelden ist,
- einen Schritt der Unterbrechung (S3b) der Verbindung eines nicht bevorzugten Endgeräts mit der Femto-Zelle,
- einen Schritt der Verbindung (S3c) des festgestellten bevorzugten mobilen Endgeräts mit der Femto-Zelle.

6. Verfahren zur Kontrolle des Zugangs mindestens eines bevorzugten mobilen Endgeräts zu einer besonderen Femto-Zelle nach einem der vorangehenden Ansprüche, **dadurch gekennzeichnet, dass** der Schritt der Unterbrechung (S3b) der Verbindung des nicht bevorzugten Endgeräts mit der Femto-Zelle in einer Umschaltung der Verbindung des nicht bevorzugten mobilen Endgeräts auf eine benachbarte Zelle der Femto-Zelle besteht.
